Europäisches Patentamt

European Patent Office

Office européen des brevets

(19)

(11) **EP 1 480 464 A1**

(12) **EUROPEAN PATENT APPLICATION**
published in accordance with Art. 158(3) EPC

(43) Date of publication:
**24.11.2004 Bulletin 2004/48**

(51) Int Cl.⁷: **H04N 7/68**

(21) Application number: **02751678.0**

(86) International application number:
**PCT/JP2002/007542**

(22) Date of filing: **25.07.2002**

(87) International publication number:
**WO 2003/073772 (04.09.2003 Gazette 2003/36)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **28.02.2002 JP 2002054647**

(71) Applicant: **Techno Mathematical CO., LTD.
Shinagawa-ku, Tokyo 140-0001 (JP)**

(72) Inventor: **TANAKA, Masafumi,
c/o TECHNO MATHEMATICAL CO.,LTD.
Shinagawa-ku, tokyo 140-0001 (JP)**

(74) Representative: **de Roquemaurel, Bruno et al
Novagraaf Technologies
122, rue Edouard Vaillant
92593 Levallois Perret Cedex (FR)**

(54) **ERROR MASKING METHOD USING MOVING PICTURE ELECTRONIC WATERMARK OF VIDEO**

(57)     An error masking method using a moving picture electronic watermark. The method can reduce the operation quantity required for estimating motion vectors.and acquire correct motion vectors even in case of high error ratio. The method has the conventional accuracy as the lowest accuracy and the upper layer compatibility with a general-purpose decoder. The digital moving picture signal is divided in area into a plurality of blocks or macro-blocks, each of which comprises N x N pixels and is motion-compensated. In obtaining or not obtaining a differential signal from one of a future or a past image, each block or macro-block is discrete-cosine transformed to issue a discrete cosine transform output. The discrete cosine transform output is quantized to obtain a quantized output. The quantized output is variable-length encoded to obtain a bit stream. On the other hand, the motion vector is embedded in each of the blocks or macroblocks as electronic watermark information to make it possible to use the electronic watermark information for masking the errors during decoding.

FIG. 1

**Description**

FIELD OF THE INVENTION

The present invention relates to a method for concealing or masking an error in image data of a moving picture by using an electronic watermark, and more particularly to the method for concealing or masking the error in image data of the moving picture byusing the electronicwatermark, wherein amotionvector is embedded into the image data when the data is encoded.

BACKGROUND OF THE INVENTION

As the Internet communications become higher in transmission speed, the moving picture image becomes most expected digital contents through the Internet. It is considered that the motion picture image is equivalent to a series of a plurality of still picture images in expression. Due to this, basically it is possible to consider the method of the present invention as an application of an electronic watermark having been embedded into the still picture image. However, in comparison with the still picture image, the moving picture image requires much more file capacities. Due to this, a compression technique for compressing the moving picture image is indispensable to the transmission of the moving picture image. Further, similar to music contents, the contents of moving picture image vary with respect to time. Due to this, in the field of an electric watermark to be applied to the contents of the moving picture image, it is necessary to remarkably speed up such applying process of the electronic watermark to the contents of the moving picture image. Consequently, in this field, it is necessary to take measures inherent in the moving picture image, which measures are quite different in concept from those of the still picture image.

The moving picture image used in a computer varies in type. Consequently, on viewing the moving picture image with respect to the electronic watermark, it is important to know whether or not the moving picture image is one having been compressed. In other words, a requisite method for embedding the electronic watermark into the image varies according to such knowledge in state of the image, as is in the case of the still picture image.

The term "non-compressed moving picture image" means literally a moving picture image still not compressed. Consequently, it is considered that the non-compressed moving picture image is equivalent to a series of the still picture images which differ from each other in field or frame contents in a manner such that a series of these field or frame contents represent motion of the image.

On the other hand, typical examples of a "compressed moving picture image" which has been already compressed are those compressed in accordance with the MPEG 1, MPEG 2, MPEG 4 and like data-compression standards. Based on its transmission rate, the compression ratio and the purpose of application of this compressed moving picture image are classified into the following groups: MPEG 1 (1 M bps ∼ 1.5 M bps, for Video and CD systems); MPEG 2 (3 M bps ∼ 1.6 M bps, for DVD and digital broadcasting systems); and, MPEG 4 (16 k bps ∼ 1 M bps, for next generation mobile communication systems) .

A low transmission rate means that the amount of data to be transmitted is small. In other words, it is possible to transmit the data at a low transmission rate. When the transmission rate is low, generally speaking such low transmission rate causes the image quality to be deteriorated while permitting a small file to store the image data therein when the data is stored in a hard disk and like memory means.

Both the MPEG 1 and the MPEG 2 require a very high-bit-rate communication line. Consequently, only the MPEG 4 is a compression standard available over even a somewhat low-bit-rate infrastructure.

In recent years, the moving picture image has become more important in the field of mobile communication lines. In a communication line, which suffers from its high bit error rate as is in the mobile communication line and the like, a part of the moving picture image can't be decoded due to the presence of a bit error and thereby impairing the decoded image in image quality. This poses the problem of deterioration of the image quality in the art. In order to avoid this problem, the MPEG 4 permits the bit error to be concealed or masked when the image is decoded. Under such circumstances, many researches as to the method for concealing or masking such error during the decoding of the moving picture image conducted according to the MPEG 4 have made.

As a typical example of this error masking method, there are: a method for concealing the error without using any motion vector; and, a method for concealing the error by using the motion vector when the image is decoded. Generally speaking, as is known in the art, it is necessary to use the latter method in the case of the moving picture image which is large in motion.

On the other hand, in the former method in which the motion vector is not used in concealing or masking the error, there are two methods, namely: a copying method for copying an 8 X 8 array matrix of blocks corresponding to a region in which the error is masked; and, an interpolation method in which the non-decoded region is interpolated using the neighboring correct pixels through a filtering process.

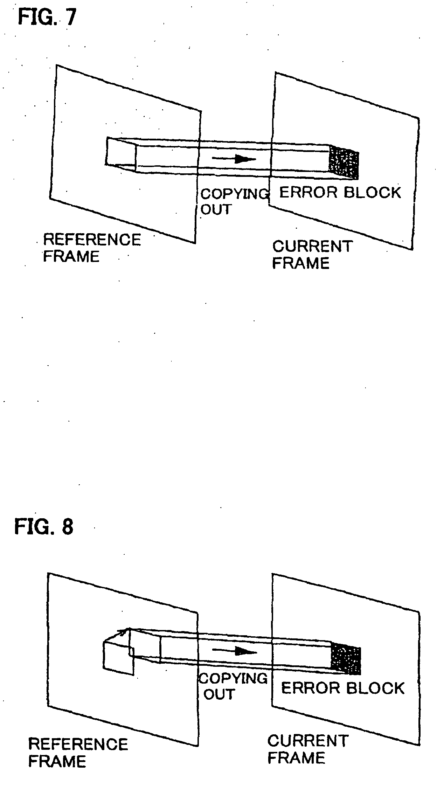

The concept view of the above-mentioned copying method for copying the 8 X 8 array matrix of the blocks is shown in Fig. 7. In this case, we pay attention to both the current frame and the reference frame in view of the fact that the moving picture image is constructed of a plurality of frames each serving as a unit in discussion. In the drawings, a painted-black region of the current frame is a non-decoded block which is not capable of being decoded. In the copying method for copying the block, a block which is in the reference frame and located in the same location as that of the non-decoded block is copied into the current frame, so that the error masking is realized.

This copying method does not require any new computation as to the motion vector, so that the amount of computation remains small. Due to this, the copying method is effective in case that the error masking is conducted as to a region which is free from any motion in contents. However, in case that the error masking is conducted as to a region having motion in contents, such copying method is not adequate because the error masking performance becomes poor.

On the other hand, in the interpolation method in which the non-decoded region is interpolated using the neighboring correct pixels through the filtering process, this method is effective as to the region which resembles the neighboring block in contents or configuration. However, in case that the error block contains any sharp gradation in configuration such as edges and like sharp shapes in contents, the interpolation method suffers from its poor error masking performance.

The method for performing the error masking by using the motion vector when the image is decoded is essentially based on the block copying method. The concept view of the block copying method using the motion vector is shown in Fig. 8, where: a painted-black region appearing in the current block corresponds to the non-decoded block which is not capable of being decoded due to the presence of the error incurred through the communication line.

In this copying method, by using a motion vector of a block which is in the reference frame and corresponds in location to the non-decoded block of the current frame, the block indicated by this motion vector inside the reference frame is copied into the location of the non-decoded block of the current frame. In this copying method, since it is necessary to additionally calculate the motion vector, and since the error masking accuracy depends on the accuracy of the motion vector, it is necessary to precisely estimate the motion vector.

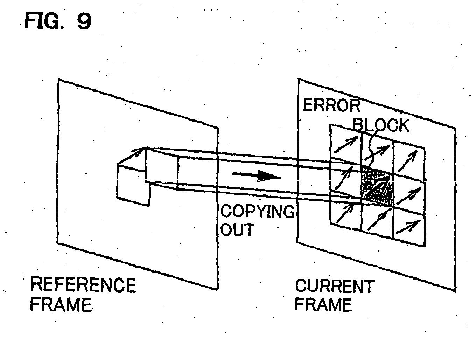

In the conventional method for estimating the motion vector, there are: an estimation method depending on the motion vectors of the neighboring blocks; and, an estimation method based on the pixels of the neighboring blocks. In the estimation method depending on the motion vectors of the neighboring blocks, estimation of the motion vector of the error block is realized by using the motion vectors of the neighboring blocks. This estimation method is shown in Fig. 9.

In the drawings, the thin arrows appearing in the current frame indicate the neighboring motion vectors of the neighboring blocks, whereas the thick arrow appearing in the current frame indicates an estimated motion vector, which is estimated with reference to the neighboring motion vectors of the neighboring blocks. In this method, the estimated motion vector is considered to be adequate in case that the error block moves in the same direction as that of the neighboring blocks in the current frame. However, in case that the error block suddenly moves in a direction different from the direction of the neighboring blocks in the current frame, and further in case that some errors occur also in the neighboring blocks, the error masking becomes poor in accuracy.

The estimation method for estimating the motion vector with reference to the pixels of the neighboring block uses the estimated motion vector which is estimated by using the neighboring pixels of the error block. This estimation method is capable of coping with sudden motion and the like, and improved in accuracy of the error masking in comparison with the other methods. However, in this estimation method, it is necessary to additionally calculate the motion vector. Due to the presence of such additional calculation, this estimation method increases the amount of its computations in comparison with the other methods.

Further, there are two problems in the conventional art or method for estimating the motion vector when the decoding is conducted. One of these problems relates to the accuracy of the estimated motion vector. In other words, in the conventional method, estimation of the motion vector is realized by using only the pixels which are free from any error. Due to this, in case that the error rate is large, and also in case that burst error occurs, it is difficult for the conventional method to realize amuchmore precise estimation. The other problem inherent in the conventional method resides in the large amount of computations required in estimation of the motion vector when the decoding is conducted. This prevents a receiver system corresponding to the transmitter system from being reduced in power consumption and in manufacturing cost.

Further, known in the art is an electronic watermark technique for embedding the motion vector. However, this electronic watermark conventional technique has been established in a condition in which the amount of data to be inserted is slight. Due to this, it is not possible to directly apply such conventional electronic watermark technique to the MPEG 4. Further, in the conventional techniques employing the MPEG 4 for the motion compensation prediction, since the data having been inserted into a certain frame is propagated to a plurality of other frames, it is difficult to keep the image quality good.

In view of the problems inherent in the conventional type of error masking method, the present invention was made. Due to this, it is an object of the present invention to provide an error masking method using a moving picture electronic watermark, wherein the method of the present invention is capable of: reducing the amount of computations required in estimating the motion vector; making it possible to obtain the proper motion vector even when the error rate is high; having the conventional accuracy as the lowest accuracy; and, realizing the upper layer compatibility with a general purpose decoder.

SUMMARY OF THE INVENTION

A method of the present invention for error masking with the use of an electronic watermark in a moving picture in order to accomplish the above objects is characterized in that: the electronic watermark is made applicable during a decoding operation for the purposes of the error masking, characterized in that: a digital moving picture signal is divided in area into a plurality of blocks or macroblocks each constructed of N x N array matrix of image pixels; each of the blocks or macroblocks is motion compensated to obtain or not obtain a difference signal with respect to one of a future or a past image, wherein each of the blocks or macroblocks is transformed through a discrete cosine transform to issue a discrete cosine transform output; the discrete cosine transform output is quantized to obtain a quantization output; the quantization output is variable-length encoded to obtain a bit stream; at the same time, a motion vector, which serves as electronic watermark information, is embedded in each of the blocks or macroblocks.

The motion vector to be embedded in each of the blocks or macroblocks comprises: data for identifying each of an I picture, a P picture and a B picture; and, data as to the size of the motion vector. Preferably, in case that the size of a search window is set at a value of $\pm X$: the amount of the data for identifying the I picture, the P picture and the B picture is 2 bits; and, the amount of data as to the size of the motion vector in both vertical and horizontal directions is $2^{n-1}(2^{n-1} \geqq | x |)$.

Further, the data as to the size of the motion vector is embedded in a DCT coefficient having been quantized. The data as to the size of the motion vector is embedded in a high-frequency region of said DCT coefficient. Furthermore, a modified quantization table is used in both encoding and decoding, provided that an AC coefficient is fixed to a value of 1 as to a requisite number of the AC coefficients having been arranged in a zigzag scanning sequence manner in the table. The requisite number is counted from the last one of said sequence of the AC coefficients in the table.

BRIEF DESCRIPTION OF THE DRAWING

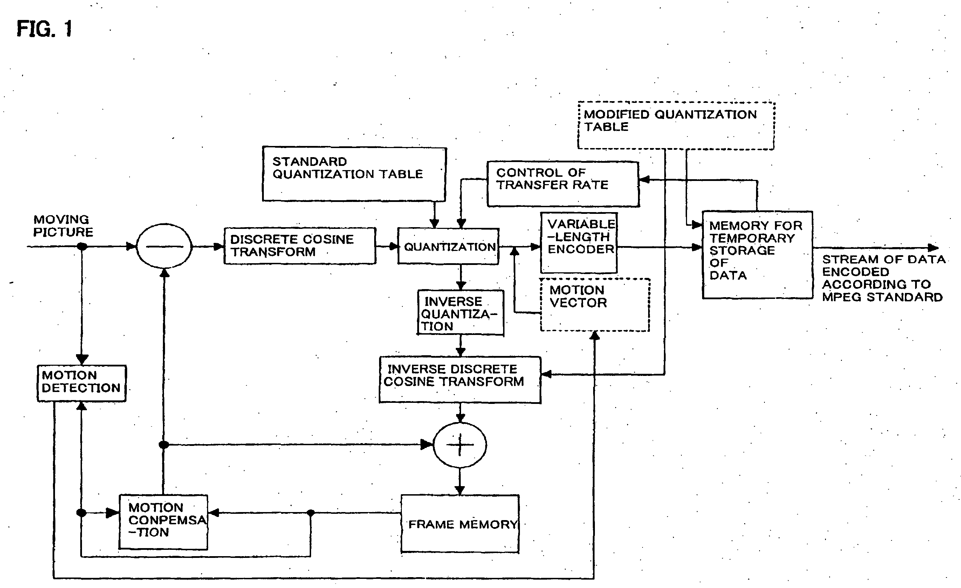

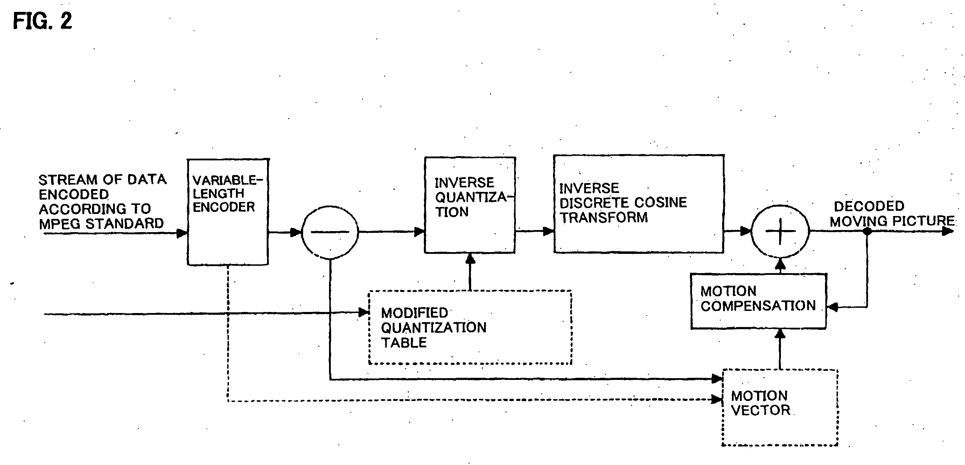

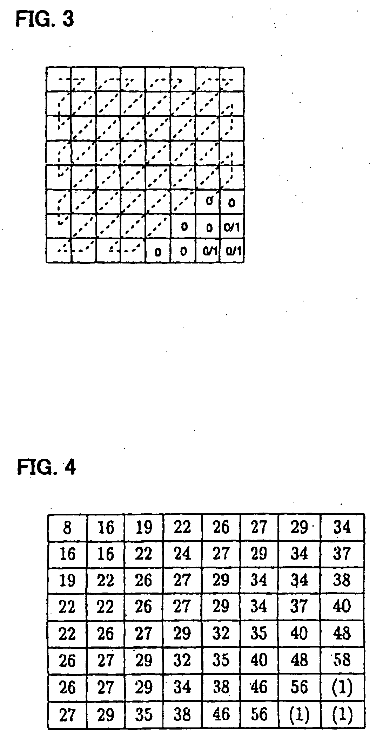

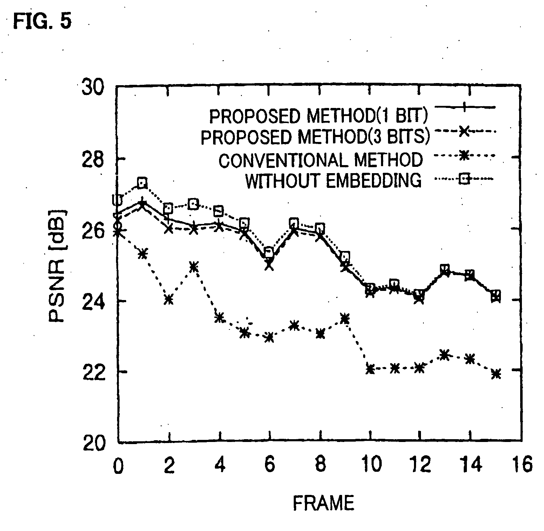

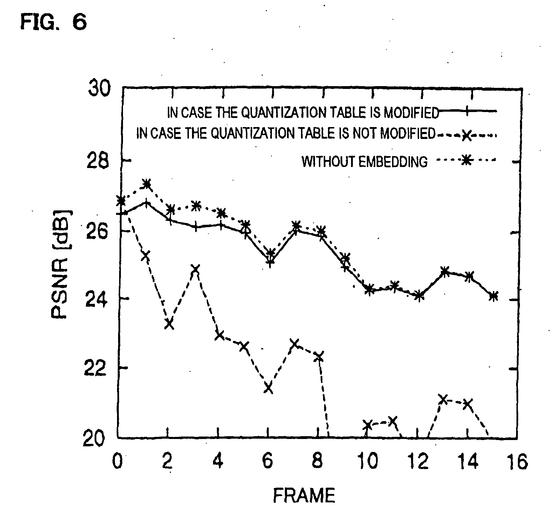

Fig. 1 is a block diagram showing the input-output relationship of a system during the encoding according to the present invention. Fig. 2 is a block diagram showing the input-output relationship of the system during the decoding according to the present invention. Fig. 3 is a view for illustrating the embedding of the information into the AC coefficient according to the present invention. Fig. 4 is a view for illustrating an example of a modified quantization table according to the present invention. Fig. 5 is a graph showing the results of an experiment as to the influence of the embedded motion vector on the image. Fig. 6 is a graph showing the results of an experiment as to the influence of the modified quantization table on the image. Fig. 7 is a conceptual view for illustrating a block copying out process employed in a conventional error masking method. Fig. 8 is a conceptual view for illustrating a block copying out process employing a conventional motion vectors. Fig. 9 is a conceptual view for illustrating a conventional method for estimating the motion vector.

BEST MODE FOR CARRYING OUT THE INVENTION

With reference to the accompanying drawings, embodiments of the present invention will be described. A method of the present invention for concealing or masking an error with the use of an electronic watermark is characterized in that: when data is encoded, a motion vector, which is to be calculated and used as a piece of electronic watermark information, is embedded into each of blocks or macroblocks; and, the electronic watermark information is used for the purposes of concealment of the error when the data is decoded. The amount of the data as to the motion vectors, which should be embedded into each of the blocks or macroblocks in order to improve the method in error concealment properties, corresponds: the amount of data as to identifiers for identifying an I picture, a P picture and a B picture; and, the amount of data as to the motion vectors.

Hereinbelow, an example of an embedding operation of the electronic watermark information into a macroblock having a unit size of 16 X 16 array matrix will be described. Incidentally, an embedding operation of the electronic watermark information into a block having a unit size of 8 X 8 array matrix will be omitted in description since the latter embedding operation may be carried out substantially in the same manner as that of the former embedding operation.

When the size of a search window is set at a value of $\pm X$, a requisite amount of the data in total reaches a value of 2n+2 in each of the macroblocks. Of this total requisite amount "2n+2" of the data: 2 bits are allocated to the identifiers each for identifying each of the I picture, the P picture and the B picture; and, $2^{n-1}$ ($2^{n-1} \geqq | x |$) bits are

allocated to the motion vectors in both the horizontal and the vertical direction. Each of the macroblocks is constructed of: 4 blocks of luminance signals; and, 2 blocks of chrominance signals. Due to this, the amount of $(2n+2) \div 4$ bits should be embedded into each of the luminance signals.

For example, when the size of the search window is set at a value of $\pm 15$, a requisite amount of the data reaches in total 12 bits in each of the macroblocks, because, of these 12 bits: 2 bits shouldbe allocated to the above-mentioned identifiers; 5bits should be allocated to the motion vectors in the horizontal direction while the remaining 5 bits should be allocated to the motion vectors in the vertical directions, so that 10 bits in total are allocated to the motion vectors. Since each of the macroblocks is constructed of 4 blocks of the luminance signals and 2 blocks of the chrominance signals, it is necessary to embed $12 \div 4 = 3$ bits into each of the blocks of the luminance signals.

As will be described later, the embedding of such 3 bits data into each of the blocks according to the present invention has proved through an experiment the fact that: deterioration in image quality, which is caused by the embedding, is minimized; and, even in the case of lack in function for using the embedded data when the decoding is performed, it is possible to perform the decoding due to the presence of compatibility.

Next will be described are an embedding method of the motion vector and an error concealing or masking method. Fig. 1 is a block diagram for illustrating the procedure of the method for embedding the motion vector when the encoding is performed according to the present invention. In this drawing, when a quantization element issues an output each time it receives an input, this construction always issues a difference in data between a current date and a previous data immediately before the current data. Consequently, an area shown in dotted lines in this drawing indicates a process remarkably different from the conventional MPEG encoding process.

In handling the information as to the image and the embedding process, it is necessary to pay attention to a guarantee of data's binary system and also to heed the restriction placed upon the image with respect to its quality deterioration occurring in the embedding of the data.

In order to guarantee the data's binary system, it is necessary to embed the data into the DCT coefficient having been quantized. In embedding of the data of 3 bits, the DCT coefficients ranging in number from 64 pieces to a requisite number of such pieces of the DCT coefficients are selected in each of the blocks. Then, each of the DCT coefficients has its value replaced with a value of 1 or 0 (Fig. 3) . As for positions thereof, for example, when 3 pieces of the DCT coefficients are required, such selected ones of the DCT coefficients are AC (p), P = 61 $\sim$ 63, which correspond to higher regions of the AC coefficients, wherein the term "AC (p), P = 61 $\sim$ 63" means the Pth one of the AC coefficients having been arranged in a zigzag scanning sequence manner.

Further, in order to restrict the quality deterioration in the image caused by the embedding of the data; amodified quantization table is used, wherein the modified quantization table is a modification of a quantization table having been used in quntizing the data. More specifically, each of the values corresponding to the "AC (p), P = 61 $\sim$ 63" in the quantization table having been used in quantizing the data are replaced with a value of 1 to prepare the modified quantization table, which table is used in the decoding operation. Of these regions, the last three regions correspond to high-frequency regions in which the image is safest in quality deterioration. An example of the modified quantization table used when the data of 3 bits are embedded in each of the blocks is shown in Fig. 4.

There is some freedom in the problem of determining which one of the macroblocks should be a target macroblock into which the motion vector information of a certain macroblock is embedded. For example, although the same location of the previous frame immediately before the current frame is considered as a target location into which the motion vector information is embedded, and although another block and the like in the same frame is also considered as such a target location, it is necessary to determine such a target location in view of stability in occurrence of errors and also in view of easiness in operation and like factors.

Methods for embedding the data into the JPEG's and the MPEG's image while guaranteeing the conventional binary system of the data have been already carried out in the art. However, in any one of these conventional methods, the information of 1 bit is embedded into each of the blocks. Further, there is no discussion in the art as to embedding of the information into the P and the B frame other than I frame.

Compression of the data in any of the P frames and the B frames according to the MPEG standard is performed using other frame's information, so that any error in pixel value not only stays back in its own frame but also propagates to any other successive frames. Due to this, the quantization table is considerably affected in value. However, in the conventional method, such propagation of the error in predictive motion compensation is still not discussed at all.

Further, in Fig. 2, which is a block diagram for illustrating the procedure of decoding according to the present invention, the arrows shown in dotted lines show a flow of the motion vector in one of the cases where: a conventional MPEG decoder is employed; the error concealment or masking is not performed; and, the error masking is not required.

In order to confirm in effectiveness the present invention in the error masking, a comparison test was conducted. In this test: the motion vector was embedded in the image; the image was decoded using a general purpose MPEG decoder; and, .the error masking was conducted using such embedded motion vector to verify the effectiveness of the present invention in the error masking.

This test was conducted by using a general purpose encoding/decoding software according to both the MPEG 1 and the MPEG 2 (i.e., MPEG 2 encoder/decoder version 1.2), wherein the compression of information was conducted according to the MPEG 1. The number of the images compressed in the above test was sixteen, wherein each of the compressed images was a monochrome image (with a size of 704 X 240 pixels) at a bit rate of 1 (M bps). Further, as for GOP structure: its cycle was 9; and, each of I/P intervals was 3, wherein "I" represents the I picture while "P" represents the P picture.

Used here as an evaluation standard was the PSNR (i.e., Peak Signal to Noise Ratio) (dB), which is defined by the following equation 1:

【EQUATION 1】

$$PSNR = 10 \, \log_{10} \frac{imagesize \times 255^2}{\sum\limits_{i=1}^{rows} \sum\limits_{j=1}^{cols} \{P(i,j) - f(i,j)\}^2} \quad [dB]$$

where: P(i,j) represents the pixel values of the frames before compression; f(i,j) represents the pixel values of the frames having been decompressed; the term "rows" means the size of the image in the vertical direction; and, the other term "cols" means the size of the image in the horizontal direction.

Here, in order to evaluate the influence on the image caused by embedding of the motion vector: the motion vector was embedded into the image and encoded in accordance with the MPEG; and, a conventional MPEG decoder was used to obtain the decoded image, wherein the data embedded was 3 bits in each of the DCT block.

Fig. 5 shows the results of this test, where: the X-axis represents the frame numbers; the y-axis represents values in the PSNR (dB); a graph indicated by the term "without embedding" is of the case of the MPEG original image; another graph indicated by the term "proposed method (1 bit) " is of the case where the data of 1 bit was embedded into each of the DCT coefficients at three different locations according to the present invention; further another graph indicated by the term "proposed method (3 bits)" is of the case where the data of 3 bits was embedded into each of the coefficients; and, still further another graph indicated by the term "conventional method" is of the case where a substitute data was inserted into the LSB (i.e., Least-Significant-Bit) of each of AC(8), AC(9) and AC(10).

Judging from the above results, it has been confirmed that: in comparison with the conventional method having the image quality considerably deteriorated, the method of the present invention is capable of obtaining the decompressed image which is close in PSNR to the original image even when the embedding is conducted.

In the JPEG, there is no significant difference in PSNRbetween: the case where the data of 1 bit is embedded in the DCT coefficient at three different locations; and, the case where the data of 3 bits is embedded in the DCT coefficient at a single location. In contrast with this, however, judging from the above results, it has been found that: in the MPEG, there is a significant difference in PSNR between the above two cases. It is considered that such a significant difference in PSNR derives from the propagation of errors in predictive motion compensation. The term "errors in predictive motion compensation" means errors derived from a difference between the reference frame of the image and the current frame of the image.

Further, illustrated in Fig. 6 are the results from the cases where: the quantization table is modified; and, the quantization table is not modified. Judging from these results, it is confirmed that: in the case where the quantization table is modified, the deterioration in image quality is not significant; and, in the case where the quantization table is not modified, the deterioration in image quality is remarkable.

This result means that: since the MPEG employs such predictive motion compensation, any error occurring in other frames may propagate so that the PSNR in the decompressed image is lowered. Restriction on the errors incurred through the embedding of the data into the frame results in not only restriction on the errors in this frame, but also restriction on propagation of the errors to the other frames. Due to this result, it is confirmed that modification of the quantization table is effective in improving the image quality.

INDUSTRIAL APPLICABILITY

The present invention has a construction as described in the above, so that in the method of the present invention for concealing or masking the errors by using the electronic watermark in the moving picture image, it is possible to: reduce the amount of computations in estimating the motion vector; obtain more precise motion vector even when the error ratio is high; combine the present invention with the prior art in use; enjoy the conventional accuracy as the lowest accuracy while enjoying the upper layer compatibility with the general purpose decoder; and, effectively apply the method of the present invention even to a somewhat low-speed data rate infrastructure.

**Claims**

1.  An method for error masking with the use of an electronic watermark in a moving picture image, wherein said electronic watermark is made applicable during a decoding operation for the purposes of said error masking, **characterized in that**: a digital moving picture image signal is divided in area into a plurality of blocks or macroblocks each constructed of N x N array matrix of image pixels; each of said blocks or macroblocks is motion compensated to obtain or not obtain a difference signal with respect to one of a future or a past image, wherein each of said blocks or macroblocks is transformed through a discrete cosine transform to issue a discrete cosine transform output; said discrete cosine transform output is quantized to obtain a quantization output; said quantization output is variable-length encoded to obtain a bit stream; at the same time, a motion vector, which serves as electronic watermark information, is embedded in each of said blocks or macroblocks.

2.  The method for error masking with the use of the electronic watermark in the moving picture image as set forth in claim 1, wherein data of said motion vector to be embedded in each of said blocks or macroblocks comprises: data for identifying each of an I picture, a P picture and a B picture; and, data as to the size of said motion vector.

3.  The method for error masking with the use of the electronic watermark in the moving picture image as set forth in claim 2, wherein, in case that the size of a search window is set at a value of $\pm$ X: the amount of said data for identifying said I picture, said P picture and said B picture is 2 bits; and, the amount of data as to the size of said motion vector in both vertical and horizontal directions is $2^{n-1}$ ($2^{n-1} \geqq |x|$).

4.  The method for error masking with the use of the electronic watermark in the moving picture image as set forth in any one of claims 1 to 3, wherein said data as to the size of said motion vector is embedded in a DCT coefficient having been quantized.

5.  The method for error masking with the use of the electronic watermark in the moving picture image as set forth in claim 4, wherein said data as to the size of said motion vector is embedded in a high-frequency region of said DCT coefficient.

6.  The method for error masking with the use of the electronic watermark in the moving picture image as set forth in any one of claims 1 to 3, wherein a modified quantization table is used in both encoding and decoding, provided that an AC coefficient is fixed to a value of 1 as to a requisite number of said AC coefficients having been arranged in a zigzag scanning sequence manner in said table, said requisite number being counted from the last one of said sequence of said AC coefficients in said table.

## FIG. 1

EP 1 480 464 A1

MODIFIED QUANTIZATION TABLE

STANDARD QUANTIZATION TABLE

CONTROL OF TRANSFER RATE

MOVING PICTURE

DISCRETE COSINE TRANSFORM

QUANTIZATION

VARIABLE -LENGTH ENCODER

MEMORY FOR TEMPORARY STORAGE OF DATA

STREAM OF DATA ENCODED ACCORDING TO MPEG STANDARD

MOTION VECTOR

INVERSE QUANTIZA- TION

MOTION DETECTION

INVERSE DISCRETE COSINE TRANSFORM

MOTION CONPEMSA -TION

FRAME MEMORY

FIG. 2

STREAM OF DATA ENCODED ACCORDING TO MPEG STANDARD → VARIABLE-LENGTH ENCODER → INVERSE QUANTIZATION → INVERSE DISCRETE COSINE TRANSFORM → DECODED MOVING PICTURE

MODIFIED QUANTIZATION TABLE

MOTION COMPENSATION

MOTION VECTOR

EP 1 480 464 A1

## FIG. 3

## FIG. 4

| 8  | 16 | 19 | 22 | 26 | 27 | 29  | 34  |
|----|----|----|----|----|----|-----|-----|
| 16 | 16 | 22 | 24 | 27 | 29 | 34  | 37  |
| 19 | 22 | 26 | 27 | 29 | 34 | 34  | 38  |
| 22 | 22 | 26 | 27 | 29 | 34 | 37  | 40  |
| 22 | 26 | 27 | 29 | 32 | 35 | 40  | 48  |
| 26 | 27 | 29 | 32 | 35 | 40 | 48  | 58  |
| 26 | 27 | 29 | 34 | 38 | 46 | 56  | (1) |
| 27 | 29 | 35 | 38 | 46 | 56 | (1) | (1) |

**FIG. 5**

FIG. 6

FIG. 7

COPYING OUT

ERROR BLOCK

REFERENCE FRAME

CURRENT FRAME

FIG. 8

COPYING OUT

ERROR BLOCK

REFERENCE FRAME

CURRENT FRAME

FIG. 9

REFERENCE
FRAME

COPYING
OUT

ERROR
BLOCK

CURRENT
FRAME

# EP 1 480 464 A1

<table>
<tr><td colspan="2">**INTERNATIONAL SEARCH REPORT**</td><td>International application No.<br><br>PCT/JP02/07542</td></tr>
</table>

**A. CLASSIFICATION OF SUBJECT MATTER**
Int.Cl$^7$ H04N7/68

According to International Patent Classification (IPC) or to both national classification and IPC

**B. FIELDS SEARCHED**

Minimum documentation searched (classification system followed by classification symbols)
Int.Cl$^7$ H04N7/24-7/68, H04N7/00-7/088

Documentation searched other than minimum documentation to the extent that such documents are included in the fields searched
| | | | |
|---|---|---|---|
| Jitsuyo Shinan Koho | 1957–1996 | Toroku Jitsuyo Shinan Koho | 1994–2002 |
| Kokai Jitsuyo Shinan Koho | 1975–2002 | Jitsuyo Shinan Toroku Koho | 1996–2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 3-46481 A (KDD Kabushiki Kaisha),<br>27 February, 1991 (27.02.91),<br>Full text; all drawings<br>(Family: none) | 1–6 |
| A | JP 6-268992 A (Sony Corp.),<br>22 September, 1994 (22.09.94),<br>Full text; all drawings<br>(Family: none) | 1–6 |
| A | JP 6-253288 A (SGS-Thomson Microelectronics S.A.),<br>09 September, 1994 (09.09.94),<br>Full text; all drawings<br>& EP 588736 A1    & US 5436664 A | 1–6 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>29 October, 2002 (29.10.02) | Date of mailing of the international search report<br>12 November, 2002 (12.11.02) |
|---|---|
| Name and mailing address of the ISA/<br>Japanese Patent Office | Authorized officer |
| Facsimile No. | Telephone No. |

Form PCT/ISA/210 (second sheet) (July 1998)

15

| INTERNATIONAL SEARCH REPORT | International application No. |
|---|---|
| | PCT/JP02/07542 |

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 8-256333 A (Matsushita Electric Industrial Co., Ltd.), 01 October, 1996 (01.10.96), Full text; all drawings (Family: none) | 1-6 |
| A | JP 7-74968 A (NEC Corp.), 17 March, 1995 (17.03.95), Full text; all drawings & US 5432615 A & GB 2279532 A | 1-6 |
| A | JP 10-322703 A (Victor Company Of Japan, Ltd.), 04 December, 1998 (04.12.98), Full text; all drawings (Family: none) | 1-6 |
| A | JP 6-98175 A (Sanyo Electric Co., Ltd.), 08 April, 1994 (08.04.94), Full text; all drawings (Family: none) | 1-6 |

Form PCT/ISA/210 (continuation of second sheet) (July 1998)